# EUROPÄISCHE PATENTANMELDUNG

(11) **EP 4 391 152 A2**
(43) Veröffentlichungstag der Anmeldung: **26.06.2024**
(21) Anmeldenummer: 23218394.7
(22) Anmeldetag: 20.12.2023
(51) Int. Cl.: H01M 10/613, H01M 10/6557, H01M 50/209, H01M 50/213, H01M 50/229, H01M 50/242, H01M 50/244, H01M 50/249, H01M 50/264, H01M 50/289, H01M 50/291, H01M 50/293

(54) **ZELLTRÄGERSTREBE, ZELLTRÄGERVERBUNDSYSTEM SOWIE BATTERIETRÄGER UND BATTERIEGEHÄUSE**

(30) Priorität: 23.12.2022 DE 102022134726
(71) Anmelder: POLYTEC PLASTICS Germany GmbH & Co. KG, 49393 Lohne (DE)
(72) Erfinder: SOARES, Jorge, 49393 Lohne (DE); LESON, Christoph, 49393 Lohne (DE); BURKERT, Tobias, 49393 Lohne (DE)
(74) Vertreter: dompatent von Kreisler Selting Werner - Partnerschaft von Patent- und Rechtsanwälten mbB

(57) **Zusammenfassung**

Zellträgerstrebe zur Aufnahme und Separierung mehrerer Batteriezellen mit einem entlang einer Erstreckungsrichtung von einem ersten Ende zu einem zweiten Ende verlaufenden Trägerkörper und einer orthogonal zu der Erstreckungsrichtung verlaufenden Stapelrichtung, wobei der Trägerkörper einen Trennsteg zur Ausbildung eines in Stapelrichtung trennenden Abschnitts umfasst mit einer ersten und zweiten einander gegenüberliegende Seitenfläche, und wobei die erste und/oder zweite Seitenfläche entlang der Erstreckungsrichtung mehrere an die aufzunehmenden Batteriezellen angepasste Erhebungen zur Aufnahme der Batteriezellen umfasst.

## Beschreibung

Die vorliegende Erfindung betrifft eine Zellträgerstrebe zur Aufnahme und Separierung mehrerer Batteriezellen, ein Zellträgerverbundsystem sowie einen Batterieträger und ein Batteriegehäuse für eine Hochvoltbatterie.

Aus dem Stand der Technik ist es bereits bekannt geworden, in batteriebetriebenen elektrischen Fahrzeugen im Bereich unterhalb der Fahrerkabine üblicherweise die zum Antrieb notwendigen Batteriezellen einer Hochvoltbatterie unterzubringen. Die Bauform wird hierbei regelmäßig flach gewählt, um die Fahrzeughöhe möglichst gering und den Fahrzeugschwerpunkt möglichst niedrig zu halten. Aufgrund des Umstandes, dass die aufzunehmenden Batterien eine geringe mechanische Belastbarkeit aufweisen, ist die vorbezeichnete Position außerhalb der vorderen und hinteren Crashzone des Fahrzeuges die bestmöglich gewählte Position. Allerdings ergeben sich aus dieser Position am Unterboden des Fahrzeuges in Kombination mit der geringen mechanischen Belastbarkeit der Batteriezellen wiederum Anforderungen an die Sicherheit eines Batterieträgers und eines Batteriegehäuses zur Aufnahme und Umhausung der Batteriezellen.

Aufgrund der hohen Dichte der eingesetzten Materialien im Bereich der Batterien wie beispielsweise Nickel, Kupfer etc. sind Batteriezellen in der Regel sehr schwer, was wiederum eine Herausforderung für die Traglast und die dynamischen Belastungen für die notwendigen Batterieträger und Batteriegehäuse bedeutet.

Um die Energiedichte der Batteriezellen auf Zellverbundebene zu erhöhen, werden die Zellen möglichst eng unter Verzicht auf zusätzliche, die Packungsdichte reduzierende, Einhausungen einzelner Batteriezellen gepackt. Dieser Einbau wird im Stand der Technik häufig als "Cell to Pack" (C2P) bezeichnet. Im Vergleich zu bisherigen Aufbauten, bei denen die Batterieeinzelzellen zunächst in einzelnen Modulen zusammengefasst wurden, welches als "Cell to module" (C2M) bezeichnet wurde, kann bei Verwendung des C2P-Aufbaus die Kapazität bei gleichem Bauraum im Vergleich zum C2M-Aufbau schlussendlich die Fahrzeugreichweite bedeutend verbessert werden.

Die C2P-Bauform erfordert im Allgemeinen die Ausbildung eines sehr steifen Batterieträgers bzw. eines sehr steifen Batteriegehäuses, da die Struktursteifigkeit durch den Zellverbund bzw. durch die Einzelbatteriezellen nicht zwingend gegeben ist.

Bei kleineren Zellen müssen insbesondere die das Batteriegehäuse bildenden Einzelteile ausreichend steif und fest ausgeführt werden. Darüber hinaus benötigen die Zellen einen Batteriezellträger, um die Zellen in der richtigen Position voneinander beabstandet und elektrisch isoliert aufzunehmen.

In den Zellträgern aus dem Stand der Technik wird der Zellträger insbesondere zur Aufnahme von Rundzellen so ausgeführt, dass die Einzelzellen axial in die dafür vorgesehenen Öffnungen des Zellträgers gesteckt werden. Bei dem Montagevorgang ist dabei eine sehr genaue Führung der Batteriezellen notwendig. Bei radial gekühlten Zellen müssen darüber hinaus die Kühlleitungen in diesen Zellträger zwischen den Batteriezellen eingefädelt werden. Die Zellträgerstrukturen aus dem Stand der Technik sind bisher sehr montageaufwändig. Weiterhin werden im Stand der Technik die bisherigen Ausführungen der Zellträger primär für die Positionierung der Zellen verwendet. Die strukturmechanischen Eigenschaften, wie zum Beispiel eine Tragfunktion, werden durch das eigentliche Batteriegehäuse erfüllt, wobei die Batteriezellen zumeist vergossen oder verklebt werden.

Bei den prismatischen Zellen besteht dabei die Problematik, dass die Zellen sich durch den Ladevorgang verformen bzw. diese anschwellen, so dass die entstehende Bauchigkeit an den Zellträgern aus dem Stand der Technik nachteilig ist, da die Verformung zu einer Verschiebung der Batteriezellen gegenüber dem Zellträger und/oder dem Batteriegehäuse bewirkt.

Aufgrund des Vergießens oder Verklebens der Batteriezellen mit dem Zellträgerwird weiterhin ein späteres Recycling sehr schwierig bis unmöglich. Weiterhin ist, wie vorbeschrieben, der Montageaufwand bei der Bestückung der Zellträger sehr hoch zur Erzielung der benötigten Steifigkeit bzw. Festigkeit. Insbesondere bei den bisherigen Zellträgerstrukturen werden zusätzlich die Batteriegehäuse oder Batterieträger benötigt, um eine geeignete Crashsicherheit für die Batteriezellen sicherzustellen.

Ausgehend von dem vorbezeichneten Stand der Technik liegt der vorliegenden Erfindung die Aufgabe zugrunde, einen verbesserten Zellträger und ein verbessertes Zellträgerverbundsystem bereitzustellen, welches den Montageaufwand deutlich verringert, ein späteres Recycling vereinfacht und weiterhin die Steifigkeit und Crashsicherheit der Zellanordnung erhöht ohne ein Verkleben oder Vergießen der Batteriezellen zu erfodern.

Erfindungsgemäß gelöst wird die vorbezeichnete Aufgabe durch eine Zellträgerstrebe zur Aufnahme und Separierung mehrerer Batteriezellen, einem Zellträgerverbundsystem umfassend mehrere Zellträgerstreben, einem Batterieträger sowie einem Batteriegehäuse.

Gemäß einem ersten Aspekt betrifft die vorliegende Erfindung eine Zellträgerstrebe zur Aufnahme und Separierung mehrerer Batteriezellen mit einem entlang einer Erstreckungsrichtung von einem ersten Ende zu einem gegenüberliegenden zweiten Ende verlaufenden Trägerkörper und einer orthogonal zu der Erstreckungsrichtung verlaufenden Stapelrichtung. Der Trägerkörper umfasst einen Trennsteg zur Ausbildung eines in Stapelrichtung trennenden Abschnitts, wobei der Trennsteg eine erste und eine zweite, in Stapelrichtung, einander gegenüberliegende Seitenfläche aufweist. Die erste und/oder die zweite Seitenfläche umfassen entlang der Erstreckungsrichtung mehrere an die aufzunehmenden Batteriezellen angepasste Erhebungen zur Positionierung und Aufnahme der Batteriezellen.

Erfindungsgemäß ist der Begriff der Anpassung der Erhebungen dahingehend zu verstehen, dass die Erhebungen an die Form und Größe der aufzunehmenden Batteriezellen angepasst sind, so dass zumindest ein Teil der ersten und/oder zweiten Seitenfläche umfassend die entsprechend angepassten Erhebungen eine Kontaktfläche bzw. Anlagefläche für die aufzunehmenden Batteriezellen bereitstellt.

Durch die vorgesehene Ausbildung von Erhebungen im Bereich der ersten und/oder der zweiten Seitenfläche können selbstverständlich resultierend auch entsprechende Einbuchtungen im Bereich der ersten und/oder der zweiten Seitenfläche erfindungsgemäß ausgebildet werden. Anders formuliert, können die erste und/oder die zweite Seitenfläche sowohl mehrere, an die aufzunehmende Batteriezellen angepasste, Erhebungen und/oder auch mehrere an die aufzunehmenden Batteriezellen angepasste Einbuchtungen umfassen.

Der Trennsteg bildet in Querschnittsebene, welche orthogonal zu der Erstreckungsrichtung verläuft, und bildet ein "I"-förmiges Querschnittsprofil des Trägerkörpers aus, wobei das Querschnittsprofil eine Breitenabmessung in Stapelrichtung und eine Höhenabmessung orthogonal zu der Erstreckungsrichtung und orthogonal zu der Stapelrichtung aufweist und wobei die Höhenabmessung um ein Vielfaches größer als die Breitenabmessung ist. Die Breitenabmessung kann entlang der Erstreckungsrichtung aufgrund der Ausbildung der mehreren an die aufzunehmenden Batteriezellen angepassten Einbuchtungen und/oder Erhebungen variieren.

Die mehreren Batteriezellen lassen sich entlang der Erstreckungsrichtung zueinander beabstandet zumindest in Teilbereichen entlang der ersten und/oder der zweiten Seitenfläche der Zellträgerstrebe anordnen. Hierbei gelangen die Batteriezellen zur Anlage in Teilbereichen an die jeweiligen Seitenflächen des Zellträgers, wobei an der Seitenfläche Erhebungen und/oder Einbuchtungen ausgebildet sind, zur zumindest teilweisen Aufnahme und Beabstandung der Batteriezellen in dem Trägerkörper der Zellträgerstrebe.

Erfindungsgemäß kann es vorgesehen sein, dass die mehreren entlang einer Zellträgerstrebe angeordneten Batteriezellen durch die Erhebungen bzw. Einbuchtungen der des Zellträgers voneinander abgegrenzt bzw. auch gegeneinander abgedichtet sind, so dass es zu keinem Kontakt der Batteriezellen untereinander kommen kann. Der Trägerkörper weist dabei auf der ersten und/oder zweiten Seitenfläche Erhebungen und/oder Einbuchtungen auf, um die Zellen positionsgenau aufzunehmen, weiterhin zur elektrischen Isolierung der einzelnen Zellen und um auf die Zellen wirkende Kräfte vorteilhaft auf die Struktur zu übertragen und eine Kraft bzw. Lastübertragung auf die eigentlichen Batteriezellen möglichst gering zu halten bzw. gänzlich zu vermeiden.

In einer weiteren optionalen Ausführungsform der Zellträgerstrebe erlaubt die unterschiedliche geometrische Ausführung der Erhebungen und/oder Einbuchtungen den Mischverbau bzw. die wechselnde Aufnahme und Anordnung von prismatischen und zylindrischen Batteriezellen zur Aufnahme der Zellen im Bereich des Trägerkörpers einer Zellträgerstrebe. Der Mischverbau kann dabei sowohl innerhalb einer Stapelreihe, also entlang der Erstreckungsrichtung einer Zellträgerstrebe, als auch in bevorzugter Weise in Stapelrichtung, jedoch durch geometrische Variationen, erreicht werden.

Orthogonal zu der Erstreckungsrichtung der Zellträgerstrebe verläuft die Stapelrichtung bzw. eine Stapelrichtung, entlang derer sich mehrere Zellträgerstreben mit dazwischen aufgenommenen Batteriezellen zu einem Zellträgerverbundsystem stapeln bzw. packen und zusammenfügen lassen. Hierbei werden die Batterieeinzelzellen zwischen einer ersten Seitenfläche einer ersten Zellträgerstrebe und einer zweiten Seitenfläche einer zweiten Zellträgerstrebe anteilig zur Ausbildung eines Zellträgerverbundsystems aufgenommen. Durch die Vorsehung der Einbuchtungen und/oder Erhebungen an den beiden ersten und zweiten Seitenflächen lassen sich beliebig viele Zellträgerstreben mit Batterieeinzelzellen modular zusammenfügen. Durch die erfindungsgemäße Zellträgerstrebe wird somit ein modulares System bereitgestellt, wobei mehrere Zellträgerstreben und Batterieeinzelzellen zu einem kompakten Zellträgerverbundsystem zusammengefügt werden können.

Erfindungsgemäß kann es vorgesehen sein, dass die Erhebungen im Bereich der ersten und/oder zweiten Seitenfläche zur Aufnahme von prismatischen und/oder zylindrischen Batteriezellen ausgebildet sind.

Der Trägerkörper kann weiterhin einen oberen Querflansch umfassen, welcher an eine obere Endfläche des Trennstegs anschließt zur Ausbildung eines L- oder T-förmigen Querschnittsprofils des Trägerkörpers und zur Ausbildung einer an die jeweilige erste und/oder zweite Seitenfläche angrenzende obere Anlagefläche für die aufzunehmenden Batteriezellen.

Weiterhin kann es vorgesehen werden, dass der Trägerkörper zusätzlich einen unteren Querflansch umfasst, welcher an eine untere Endfläche des Trennsteges anschließt zur Ausbildung eines C-, Z- oder Doppel-T-förmigen Querschnittsprofils des Trägerkörpers und zur Ausbildung einer an die jeweilige erste und/oder zweite Seitenfläche angrenzende untere Anlagefläche für die aufzunehmenden Batteriezellen.

Die untere und/oder obere Anlagefläche verläuft im Wesentlichen orthogonal zu der jeweiligen ersten bzw. zweiten Seitenfläche. Der untere und/oder obere Qurflansch kann jeweils mittig an die jeweilige Endfläche des Trennsteges anschließen bzw. daran angebunden sein, so dass der untere und/oder obere Steg beidseitig des Trennstegs im Bereich der ersten und zweiten Seitenfläche vorsteht und auch zu den beiden Seitenflächen jeweils eine obere und/oder untere Anlagefläche ausbildet. Alternativ kann es erfindungsgemäß jedoch auch vorgesehen sein, den unteren und/oder oberen Querflansch außermittig an die jeweilige Endfläche des Trennstegs anzubinden bzw. mit dieser zu verbinden, so dass der untere und/oder obere Steg auch lediglich einseitig des Trennstegs im Bereich der ersten oder zweiten Seitenfläche vorsteht und lediglich zu einer der beiden Seitenflächen eine untere und/oder obere Anlagefläche ausbildet. Erfindungsgemäß können somit bei einer mittigen Anordnung des unteren oder oberen Querflansches im Querschnitt ein T-Profil oder ein Doppel-T-Profil ausgebildet werden, bei einer außermittigen Anordnung können beispielhafte L-, C- oder Z-förmige Profile ausgebildet werden.

Gemäß der Erfindung kann es weiterhin vorgesehen werden, dass die den Trägerkörper bildenden Elemente und damit insbesondere der Trennsteg und der mindestens eine obere und/oder untere Querflansch anteilig und integral beispielsweise als singuläres Spritzgussteil gefertigt werden.

Es kann weiterhin vorgesehen werden, dass in dem oberen und/oder unteren Querflansch entlang der Erstreckungsrichtung mehrere voneinander beabstandete Ausnehmungen oder Löcher ausgestaltet sind zur Durchführung beispielsweise von elektrischen Kontakten und/oder von Sicherheitsventilen der aufzunehmenden Batteriezellen.

Der Trägerkörper kann einen hybriden Materialaufbau umfassend zumindest eine erste Komponente gebildet aus einem Kunststoff und eine zweite Komponente gebildet aus einem Versteifungsmaterial zur Erhöhung der mechanischen Eigenschaften umfassen.

Die Materialien zur Erhöhung der mechanischen Eigenschaften können lokal in den Bereich höchster Belastungen eingebracht werden, so dass diese die Hauptlasten tragen. Der Trägerkörper kann erfindungsgemäß jedoch auch aus einem einzigen singulären Materialtyp gebildet werden.

In dem Trägerkörper kann eine Vielzahl entlang der Erstreckungsrichtung verlaufender Verstärkungsfasern eingebettet werden. Es kann vorgesehen werden, dass die Verstärkungsfasern bevorzugt unidirektional entlang der Erstreckungsrichtung beispielsweise als unidirektionale oder als mehrere unidirektionale Faserlagen in den Trägerkörper eingebettet oder daran lasttragend angebunden werden. Erfindungsgemäß kann es jedoch auch vorgesehen sein, dass ein Gewebe oder Gelege gebildet aus Verstärkungsfasern in den Trägerkörper eingebettet oder lasttragend damit verbunden wird.

Die Verstärkungsfasern können bevorzugt im oberen und/oder unteren Querflansch und/oder im Trennsteg eingebettet werden.

Bei den Verstärkungsfasern kann es sich beispielsweise um Kohlefasern, Glasfasern, Metalldraht handeln.

In einer bevorzugten Ausführungsform kann der Trägerkörper anteilig aus einem thermoplastischen kurz- oder langglasfaserverstärkten Kunststoff und anteilig aus einem endlosfaserverstärkten thermoplastischen Kunststoff gebildet werden.

Weiterhin kann es vorgesehen werden, dass der Trägerkörper an dem ersten und/oder zweiten Ende in Richtung der Erstreckungsrichtung mindestens ein Endelement umfasst zur Ausbildung einer an die jeweilige erste und/oder zweite Seitenfläche angrenzende Endanlagefläche für die aufzunehmenden Batteriezellen.

Der Trägerkörper kann im Bereich des ersten und/oder zweiten Endes eine Befestigungseinrichtung zur Befestigung der Zellträgerstrebe bzw. des Trägerkörpers an einem Batterieträger oder an einem Batteriegehäuse umfassen.

Im Bereich der ersten und/oder zweiten Seitenfläche können bevorzugt komprimierbare Polsterelemente angeordnet werden. Die komprimierbaren Polsterelemente werden auch üblicherweise beispielsweise als Compression Pads oder Swelling Pads bezeichnet, wobei die komprimierbaren Polsterelemente bevorzugt aus Schaumstoff oder aus einem Aerogel hergestellt werden können. Die komprimierbaren Polsterelemente können im Bereich der ersten und/oder zweiten Seitenfläche insbesondere im Bereich der Erhebungen oder Einbuchtungen angeordnet werden. Die komprimierbaren Polsterelemente können entweder vorfixiert an der ersten und/oder zweiten Oberfläche oder zusammen mit der Montage der prismatischen Zellen in dem Zellträgerkörper verbaut bzw. dort angeordnet werden.

In dem Trennsteg kann mindestens eine Aussparung ausgebildet werden zur Aufnahme eines vorzugsweise aktiven Temperierungselementes in dem Bereich des Trägerkörpers. Weiterhin kann es erfindungsgemäß vorgesehen werden, mindestens ein Kühlelement, wie beispielsweise ein Kühlkanal, unmittelbar bei der Herstellung der Zellträgerstrebe zum Beispiel einzubetten bzw. einzubringen, beispielsweise unter Nutzung eines Spritzgussverfahrens. Dabei kann das Kühlelement, insbesondere ein Kühlkanal, mit Kunststoff umspritzt werden und damit fest und formschlüssig mit dem Trägerkörper der Zellträgerstrebe verbunden werden. Durch die Integration im Spritzgussprozess wird der Prozessschritt in der Montage vermieden. Ebenso würde das Kühlelement, wenn es aus einem Metallprofil, wie einem Aluminiumprofil, ausgeführt ist, zu einem Teil der die Zellträgerstrebe verstärkenden Struktur. Es kann vorgesehen werden, die Kühlelemente in jede der Trägerkörper der Zellträgerstreben einzubringen und damit eine Kühlung in Stapelrichtung an der Vorder- und Rückseite jeder aufzunehmenden Batteriezellen vorzusehen.

Weiterhin kann es erfindungsgemäß vorgesehen werden, die Zellträgerstrebe bzw. den Trägerkörper mehrschalig auszugestalten, zumindest aus zwei Teilen, wobei die Einzelteile vorzugsweise aus demselben Material bestehen und z.B. durch einen Schweiß- bzw. sonstigen Fügeprozess miteinander verbunden bzw. gefügt werden.

Durch das Fügen der Einzelteile kann ein Hohlraum in der Zellträgerstrebe oder dem Trägerkörper ausgebildet werden. Generell kann der Trägerkörper einen Hohlraum umfassen, welcher im Bereich zwischen der ersten und zweiten Seitenfläche des Zellträgerkörpers eingebracht ist und einen Hohlraum ausbildet, in dem beispielsweise Kühl- bzw. Temperierungsmittel transportiert werden kann. Die Wände, die den Hohlraum bilden, grenzen wiederum zumindest teilweise an die aufzunehmenden Batteriezellen an, so dass die Batteriezellen nur einen geringen Abstand zum Temperiermedium haben und dadurch besonders effektiv aktiv temperiert werden können. Die zuvor beschriebene Ausführungsform weist den Vorteil auf, dass der Trägerkörper selbst bzw. das eigentliche Material des Trägerkörpers unmittelbar für die Kühlung genutzt wird und aber weiterhin gleichzeitig eine lasttragende Struktur zur Aufnahme der Batteriezellen ausbildet. Ein besonderer Vorteil der vorbezeichneten Ausführungsform ist die Sortenreinheit des verwendeten Materials, so dass die erfindungsgemäße Zellträgerstrebe bzw. der entsprechende Trägerkörper, welcher auch eine Temperierungsvorrichtung umfasst, trotzdem einfach recycelt werden kann.

Erfindungsgemäß kann es vorgesehen werden, dass der Trägerkörper zur Stapelung bzw. Aneinanderreihung von mehreren Zellträgerstreben entlang der Stapelrichtung ausgebildet ist.

Der Trägerkörper kann bevorzugt im Bereich des unteren und/oder oberen Querflansches aneinander angepasste erste und zweite Rast- bzw. Verriegelungselemente umfassen zur lasttragenden Verbindung des Trägerkörpers mit zumindest einer weiteren Zellträgerstrebe bzw. zumindest einem weiteren Trägerkörper einer weiteren Zellträgerstrebe.

Die Rastelemente können so angeordnet werden, dass die Verrastung in Montagerichtung der Zellen bzw. der Streben erfolgt.

Es kann weiterhin vorgesehen werden, dass die Rastelemente so angeordnet werden, dass durch eine 180°-Drehung einer Strebe ein Verbau von zylindrischen Batteriezellen mit dem gleichen Bauteil mäanderförmig erfolgen kann.

Ein Trägerkörper, der zumindest einen oberen Querflansch und/oder einen unteren Querflansch umfasst, kann weiterhin auf der dem Trennsteg abgewandten Seitenfläche zumindest eines Querflansches einen einteiligen durchgezogenen oder mehrteiligen in Abschnitte unterteilten Vorsprung umfassen zur Beabstandung des Trägerkörpers von einer Anlagefläche eines Batterieträgers oder eines Batteriegehäuses.

Erfindungsgemäß kann es vorgesehen sein, dass der Trennsteg in der Querschnittsebene kastenförmig ausgebildet ist zur Ausbildung eines Zwischenraums zwischen der ersten und zweiten Seitenfläche.

Weiterhin kann es erfindungsgemäß vorgesehen sein, ein Strukturprofil in den Zwischenraum anzuordnen, welches lasttragend mit dem Trägerkörper der Zellträgerstrebe verbunden ist oder in das Material des Trägerkörpers zumindest teilweise eingebettet und umschlossen ist.

In dem Zwischenraum kann mindestens ein Anbindungspunkt zur lasttragenden Verbindung des Trägerkörpers mit einem Batterieträger oder einem Batteriegehäuse ausgebildet werden. Die Anbindungspunkte können Gewindeinserts enthalten zur Befestigung von Schrauben, die von der Außenseite des Gehäuses durch den Deckel oder den Boden in die Gewindeinserts geschraubt werden. Die Anbindungspunkte können zumindest eine angeformte Bohrung in dem Trägerkörper umfassen, so dass eine selbstfurchende Schraube zur Befestigung des Trägerkörpers an einem Batterieträger oder an einem Batterieträgergehäuse verwendet werden kann.

Die Anbindungspunkte können weiterhin umlaufende Dichtungen enthalten zur Kapselung des Batterieträgers oder des Batteriegehäuses bei Verwendung einer Verschraubung von der Außenseite des Gehäuses oder des Batterieträgers.

Gemäß einem zweiten Aspekt betrifft die vorliegende Erfindung ein Zellträgerverbundsystem, welches eine Mehrzahl von Zellträgern gemäß dem ersten Aspekt der Erfindung zur Aufnahme und Separierung mehrerer Batteriezellen und bevorzugt zumindest ein Zugband umfasst.

Zur Ausgestaltung des Zellträgerverbundsystems können die Zellträger eine Mehrzahl von Batterieeinzelzellen aufnehmen und in Stapelrichtung miteinander verbunden werden, so dass immer zwischen einer ersten und einer zweiten Zellträgerstrebe eine Mehrzahl von Batterieeinzelzellen aufgenommen werden. Durch die Vorsehung von einer Vielzahl von in Stapelrichtung aneinander angeordneten und miteinander verbundenen Zellträgerstreben wird ein Zellträgerverbundsystem ausgebildet, wobei bevorzugt die Vielzahl der Zellträgerstreben mittels einem mindestens einen Zugband in Stapelrichtung miteinander verbunden bzw. in Stapelrichtung durch das Zugband einer Zugkraft auferlegt werden.

Das mindestens eine Zugband kann aus einem zugfesten Material gebildet werden und bevorzugt mindestens eine Lage eines unidirektionalen Fasertapes umfassen, wobei die Faserlängsrichtung in Längsrichtung des Zugbandes ausgerichtet ist.

Gemäß einem dritten Aspekt betrifft die vorliegende Erfindung einen Batterieträger, welcher eine Mehrzahl von Zellträgerstreben gemäß dem ersten Aspekt der Erfindung oder mindestens ein Zellträgerverbundsystem gemäß dem zweiten Aspekt der vorliegenden Erfindung sowie einen Batterieträgerrahmen und ein Batterieträgerunterteil umfasst. Das Batterieträgerunterteil ist mit dem Batterieträgerrahmen verbindbar ausgestaltet zur Ausbildung eines einseitig offenen Aufnahmeraums zur Anordnung des Zellträgerverbundsystems oder der Mehrzahl von gestapelten Zellträgerstreben.

Gemäß einem vierten Aspekt betrifft die vorliegende Erfindung ein Batterieträgergehäuse, welches zumindest einen Batterieträger sowie weiterhin ein Batteriegehäuseoberteil umfasst, wobei das Batterieträgerunterteil und das Batteriegehäuseoberteil mit dem Batterieträgerrahmen verbindbar sind zur Ausbildung eines allseitig umschlossenen Aufnahmeraums zur Anordnung des Zellträgerverbundsystems oder der Mehrzahl von gestapelten Zellträgerstreben.

Im Folgenden werden unter Bezugnahme auf die beigefügten Figuren beispielhafte Ausführungsformen der erfindungsgemäßen Zellträgerstreben, eines beispielhaften Zellträgerverbundsystems, eines Batterieträgers sowie Batteriegehäuses dargestellt.

Es zeigen:
- Fign. 1A und 1B: perspektivische Ansichten einer ersten beispielhaften Ausführungsform einer erfindungsgemäßen Zellträgerstrebe;
- Fign. 2A bis 2C: Ansichten einer zweiten beispielhaften Ausführungsform einer erfindungsgemäßen Zellträgerstrebe;
- Fign. 3A bis 3D: die Ansichten unterschiedlicher beispielhafter Ausführungsformen erfindungsgemäßer Zellträgerstreben umfassend Temperierungseinrichtungen;
- Fign. 4A und 4B: eine weitere beispielhafte Ausführungsform einer erfindungsgemäßen Zellträgerstrebe mit kastenförmigem Querschnitt;
- Fig. 5: eine beispielhafte Ausführungsform eines Zellträgerverbundsystems;
- Fig. 6A: eine beispielhafte Ausführungsform eines erfindungsgemäßen Batterieträgers;
- Fig. 6B: eine beispielhafte Ausführungsform eines erfindungsgemäßen Batteriegehäuses;
- Fig. 6C: eine weitere beispielhafte Ausführungsform eines Batterieträgerrahmens;
- Fign. 7A bis 7C: eine beispielhafte Ausführungsform eines erfindungsgemäßen Batteriegehäuses mit aufgenommenen erfindungsgemäßen Zellträgerverbundsystemen;
- Fig. 8: eine weitere beispielhafte Ausführungsform eines erfindungsgemäßen Batteriegehäuses umfassend ein erfindungsgemäßes Zellträgerverbundsystem.

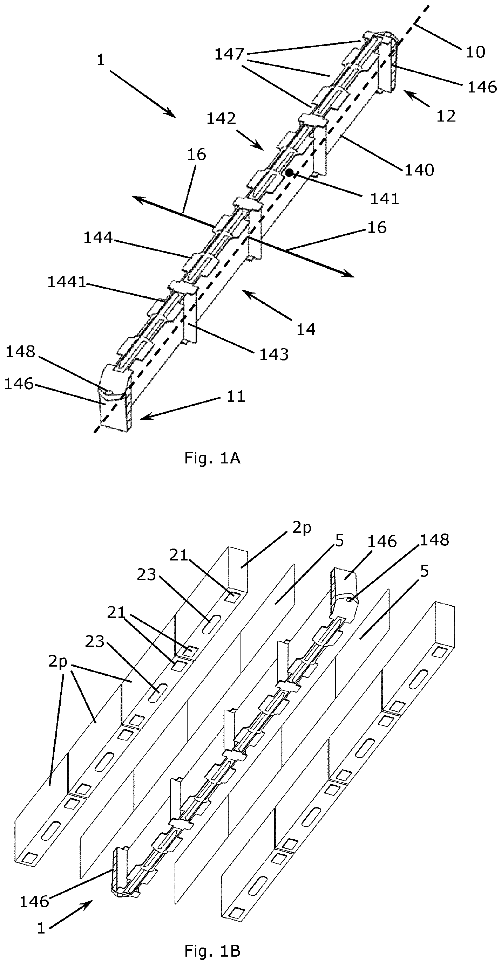

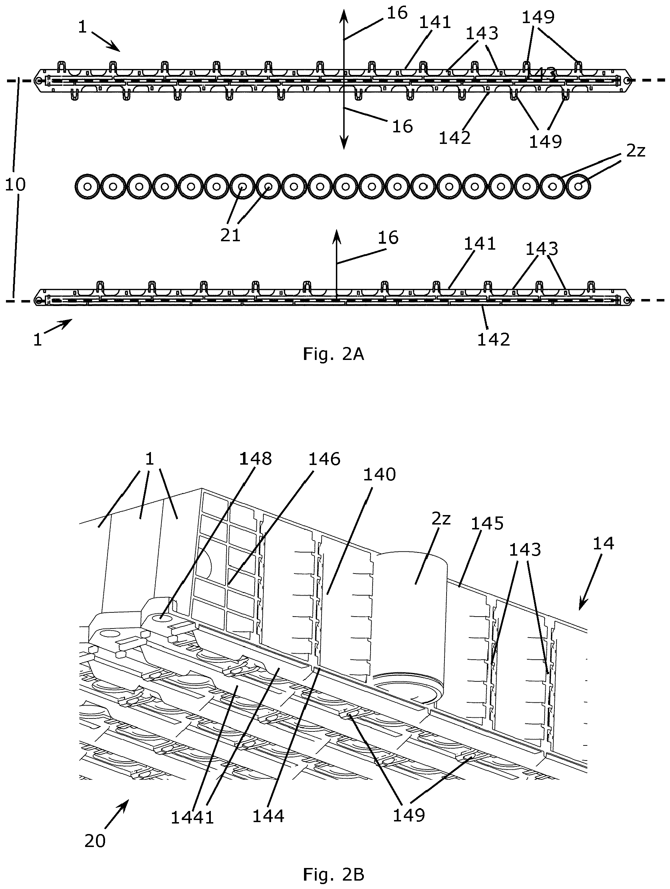

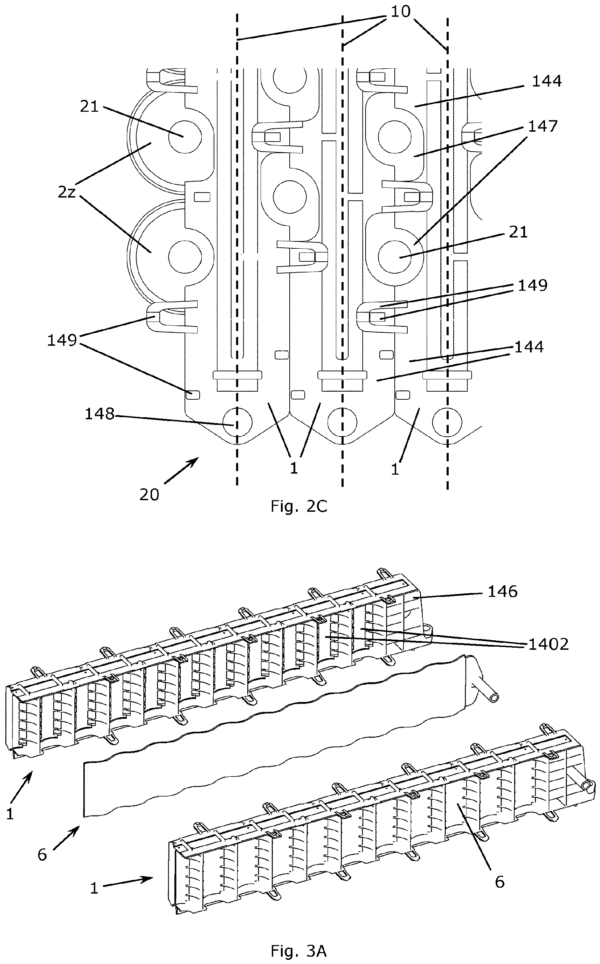

Die Figuren 1A und 1B zeigen eine erste beispielhafte Ausführungsform einer erfindungsgemäßen Zellträgerstrebe 1, welche in der Ausführungsform gemäß Figuren 1 zur Aufnahme von mehreren, nämlich beidseitig vier, prismatischen Batteriezellen 2p ausgebildet ist. In den Figuren 1 ist die Aufnahme von prismatischen Batteriezellen 2p nur als ein mögliches Beispiel gewählt selbstverständlich könnte die Zellträgerstrebe 1 auch zur Aufnahme von zylindrischen Batteriezellen 2z ausgestaltet werden, so wie dies in den Figuren 2 dargestellt ist. Erfindungsgemäß ist die Zellträgerstrebe 1 ist zur Aufnahme und Separierung mehrerer Batteriezellen 2 beliebiger Form (zum Beispiel: prismatische Batteriezellen 2p und/oder zylindrische Batteriezellen 2z) ausgebildet mit einem entlang einer Erstreckungsrichtung 10 von einem ersten Ende 11 zu einem gegenüberliegenden zweiten Ende 12 verlaufenden Trägerkörper 14 und einer orthogonal zu der Erstreckungsrichtung 10 verlaufenden Stapelrichtung. Der Trägerkörper 14 umfasst wiederum einen Trennsteg 140 zur Ausbildung eines in Stapelrichtung 16 trennenden Abschnitts mit einer ersten und zweiten einander gegenüberliegenden Seitenfläche 141, 142. Die erste und zweite Seitenfläche 141, 142 weisen in der beispielhaften Ausführungsform gemäß Figuren 1A und 1B jeweils entlang der Erstreckungsrichtung 10 mehrere, an die aufzunehmenden Batteriezellen 2 bzw. genauer der Ausführungsform gemäß Figuren 1, die aufzunehmenden prismatischen Batteriezellen 2z, angepasste Erhebungen 143 zur Aufnahme der Batteriezellen 2z auf. Die Erhebungen 143 sind in der dargestellten Ausführungsform gemäß Figuren 1 rippenförmig ausgebildet. Aufgrund der jeweiligen Ausbildung der beiden gegenüberliegenden Seitenflächen 141, 14 mit den vorbezeichneten Erhebungen 143 können, wie dies in Fig. 1B dargestellt ist, beidseitig der vorbeschriebenen erfindungsgemäßen Zellträgerstrebe 1 mehrere Batteriezellen 2p aufgenommen werden. In der dargestellten Ausführungsform gemäß Figuren 1 weist die Zellträgerstrebe an den beiden Seitenflächen 141, 142 jeweils entlang der Erstreckungsrichtung 10 vier voneinander beabstandete Aufnahmebereiche für die prismatischen Batteriezellen 2p auf.

Wie dies ebenfalls den Figuren 1 entnehmbar ist, wrden durch die Ausgestaltung der Erhebungen 143 gegenüber den Erhebungen rückgezogenene Bereiche ausgebildet im Bereich der ersten oder zweiten Seitenfläche 141, 142, in welchen die Batteriezellen 2p angeordnet und zumindest teilweise aufgenommen werden können. Die Erhebungen 143 sind in Zusammenhang mit dem Trennsteg 140 so ausgebildet, dass eine sichere und beabstandete Anordnung und Aufnahme der Batteriezellen 2p gewährleistet wird durch die erfindungsgemäße Zellträgerstrebe 1. Die Erhebungen 143 im Bereich der ersten und zweiten Seitenfläche 141, 142 sind in der dargestellten Ausführungsform zur Aufnahme von prismatischen Batteriezellen ausgebildet.

Die in den Figuren 1A dargestellte beispielhafte Ausführungsform der erfindungsgemäßen Zellträgerstrebe 1 weist weiterhin einen oberen Querflansch 144 auf, welcher an eine obere Endfläche des Trennstegs 140 unmittelbar anschließt und bildet in der dargestellten Ausführungsform gemäß Figuren 1 einen T-förmigen Querschnitt des Trägerkörpers 14 aus, wobei gleichzeitig eine an die erste und zweite Seitenfläche 141, 142 angrenzende obere Anlagefläche für die aufzunehmenden Batteriezellen 2 bzw. gemäß Figuren 1 prismatische Batteriezellen 2p ausgebildet wird.

Weiterhin ist in den Figuren 1 erkennbar, dass im Bereich des oberen Querflansches 144 entlang der Erstreckungsrichtung 10 mehrere voneinander beabstandete Ausnehmungen 147 zur Durchführung von elektrischen Kontakten 21 und von Sicherheitsventilen 23 der aufzunehmenden prismatischen Batteriezellen 2z ausgebildet sind. In der Figur 1B sind beispielhaft acht prismatische Batteriezellen 2p dargestellt, die jeweils zwei elektrische Kontakte 21 sowie im mittleren Bereich ein Sicherheitsventil 23 umfassen. Das Sicherheitsventil 23 der Batteriezelle 2z dient dabei dazu, bei einem thermischen Durchgehen bzw. einem Zellbrand entstehende Gase und Partikel kontrolliert ableiten zu können.

Weiterhin ist an der beispielhaften Ausführungsform der Zellträgerstrebe 1 gemäß Figuren 1 entnehmbar, dass diese im Bereich des ersten und zweiten Endes 11, 12 in Richtung der Erstreckungsrichtung 10 ein Endelement 146 umfasst, wiederum zur Ausbildung einer an die jeweilige erste und zweite Seitenfläche 141, 142 angrenzende Anlagefläche für die aufzunehmenden Batteriezellen 2p. Den Figuren 1 ist im Hinblick auf das Endelement 146 zu entnehmen, dass dieses in Erstreckungsrichtung 10 mit einer großen Materialstärke ausgeführt ist, derart, dass dieses eine erhöhte Steifigkeit und auch einen Schutz für die aufzunehmenden Batteriezellen 2 bietet.

Die Zellträgerstrebe 1 gemäß Figuren 1 weist weiterhin im Bereich des Trägerkörpers 14 im Bereich des ersten und/oder zweiten Endes 11, 12 jeweils eine Befestigungseinrichtung 148 zur Befestigung der Zellträgerstrebe 1 an einem nicht dargestellten Batterieträger oder an einem Batteriegehäuse auf. In der dargestellten Ausführungsform gemäß Figuren 1 ist die Befestigungseinrichtung 148 als von dem Trägerkörper 14 vorstehende Befestigungslasche ausgebildet mit einem mittigen Aufnahmepunkt zur Durchführung eines Befestigungsmittels, wie beispielsweise einer Schraube.

Wie dies der Fig. 1B entnehmbar ist, kann es vorgesehen werden, dass im Bereich der ersten oder zweiten Seitenfläche 141, 142 komprimierbare Polsterelemente 5 angeordnet werden. Die komprimierbaren Polsterelemente 5 dienen dabei dazu, mögliche Verformungen der aufzunehmenden Batteriezellen 2p zu kompensieren. So ist es beispielsweise aus dem Stand der Technik bekannt, dass es bei einer zunehmenden elektrischen Aufladung der prismatischen Batteriezelle 2p zu einem mittigen Ausbeulen kommt, welches durch die Polsterelemente 5 vorteilhaft kompensiert werden kann. Weiterhin ist an der vorbezeichneten Ausführungsform der Vorsehung der Polsterelemente 5 vorteilhaft, dass diese die aufzunehmenden Batteriezellen 2 von der eigentlichen Struktur der Zellträgerstreben 1 mechanisch entkoppeln, wobei auftretende Lasten durch die Zellträgerstreben 1 und insbesondere die Zellträgerkörper 14 aufgenommen und nicht unmittelbar an die Batteriezellen 2p übertragen werden. Der obere Querflansch 144 weist in den Ausführungsformen gemäß Figuren 1 auf der dem Trennsteg 114 abgewandten Fläche einen mehrteiligen Vorsprung 1441 auf, zur Beabstandung des Trägerkörpers 140 von einer Anlagefläche eines Batterieträgers oder eines Batteriegehäuses.

Die Figuren 2A bis 2C zeigen eine zweite beispielhafte Ausführungsform einer erfindungsgemäßen Zellträgerstrebe 1. Die Zellträgerstrebe 1 weist in den Ausführungsformen gemäß Figuren 2 eine Vielzahl von Erhebungen 143 auf, welche zur Aufnahme von einer Mehrzahl an zylindrischen Batteriezellen 2z ausgebildet sind.

Hierbei zeigt die Fig. 2A bereits zwei unterschiedliche Ausführungsformen einer erfindungsgemäßen Zellträgerstrebe 1, die zunächst ähnlich wie in den Figuren 1 ausgebildet ist. Im Unterschied zu der Ausführungsform gemäß Fig. 1 sind die Erhebungen 143 zur Aufnahme von zylindrischen Batteriezellen 2z angepasst. Dabei kann es erfindungsgemäß vorgesehen sein, wie in der Fig. 2A in der oberen Zellträgerstrebe verdeutlicht, dass die vorbezeichneten Erhebungen im Bereich der ersten Seitenfläche 141 und auch der zweiten Seitenfläche 142 ausgebildet werden oder aber, wie in der Fig. 2A in der unteren Zellträgerstrebe 1 dargestellt, die vorbezeichneten Erhebungen 143 lediglich im Bereich der ersten Seitenfläche 141 ausgebildet werden. An der oberen dargestellten Zellträgerstrebe 1 der Fig. 2A können somit beidseitig des Trägerkörpers 14 zylindrische Batteriezellen 2z aufgenommen werden. Hingegen kann die untere dargestellte Zellträgerstrebe 1 der Fig. 2A lediglich einseitig im Bereich der ersten Seitenfläche 141 mehrere zylindrische Batteriezellen 2z entlang der Erstreckungsrichtung 10 aufnehmen. Die untere dargestellte Zellträgerstrebe 1 kann damit beispielsweise als Abschlusselement eines Zellträgerverbundsystems vorgesehen werden.

In der Fig. 2A sind auch die entsprechenden Stapelrichtungen der Zellträgerstreben 1 mit Pfeilen 16 dargestellt. Dementsprechend kann die untere Zellträgerstrebe 1 lediglich einseitig ausgehend von der ersten Seitenfläche 141 gestapelt und mit weiteren Zellträgerstreben 1 verbunden werden. Wie dies durch den Doppelpfeil 16 in der oberen Zellträgerstrebe 1 gemäß Fig. 2A dargestellt ist, kann diese beidseitig ausgehend von der ersten Seitenfläche 141, aber auch ausgehend von der zweiten Seitenfläche 142, mit weiteren Zellträgerstreben 1 verbunden bzw. gestapelt werden zur Bildung eines erfindungsgemäßen Zellträgerverbu ndsystems.

In der Fig. 2B ist eine Detailansicht der erfindungsgemäßen Zellträgerstreben 1 gemäß Fig. 2A dargestellt. Wie in Fig. 2B erkennbar, weist der Trägerkörper 14 einen Trennsteg 140 zur Ausbildung eines in Stapelrichtung 16 trennenden Abschnitts auf mit einer ersten Seitenfläche 141 und einer entsprechenden gegenüberliegenden zweiten Seitenfläche 142. In der Fig. 2B sind die mehreren, an die aufzunehmenden zylindrischen Batteriezellen 2z angepassten, Erhebungen 143 ersichtlich. Anders wie in den beispielhaften Ausführungsformen gemäß Figuren 1 werden die Erhebungen 143 in den Figuren 2 nicht nur lediglich als vorstehende Stege ausgebildet, sondern weisen eine an den zylindrischen Oberflächenverlauf angepasste dreidimensionale Geometrie auf zur Bildung bevorzugt von die zylindrischen Zellen 2z aufnehmenden Halbschalen.

Der Trägerkörper 14 in der dargestellten Ausführungsform gemäß Figuren 2 weist einen oberen Querflansch 144, welcher an eine obere Endfläche des Trennstegs 140 anschließt und eine an die jeweilige erste und zweite Seitenfläche 141, 142 angrenzende obere Anlagefläche für die aufzunehmenden Batteriezellen 2z ausbildet auf. Weiterhin umfasst der Trägerkörper 14 in den Figuren 2 einen unteren Querflansch 145, welcher an eine untere Endfläche des Trennstegs 140 anschließt, wobei entsprechend im Querschnitt ein Doppel-T-förmiges Querschnittsprofil des Trägerkörpers 14 ausgebildet wird, der untere Querflansch 145 bildet im Bereich der ersten und zweiten Seitenfläche 141, 142 eine entsprechende untere Anlagefläche für die aufzunehmenden Batteriezellen 2z aus.

In der Ausführungsform gemäß Figuren 2 weist der Trägerkörper 14 im Bereich des ersten und zweiten Endes 11, 12 in Richtung der Erstreckungsrichtung 10 jeweils ein Endelement 146 auf. Weiterhin weist die Zellträgerstrebe 1 im Bereich des Trägerkörpers140 am ersten und zweiten Ende 11, 12 jeweils eine Befestigungseinrichtung 148 zur Befestigung der Zellträgerstrebe 1 an einem nicht dargestellten Batterieträger 3 oder einem Batteriegehäuse 4 auf.

In der beispielhaften Ausführungsform gemäß Figuren 2 umfasst der Trägerkörper 14 im Bereich des oberen Querflansches 144 eine Vielzahl aneinander angepasster erster und zweiter Rastelemente 149 zur lasttragenden Verbindung des Trägerkörpers 14 mit zumindest einer weiteren Zellträgerstrebe 1. Wie dies insbesondere den Figuren 2B und 2C entnehmbar ist, lassen sich durch die aneinander angepassten ersten und zweiten Rastelemente 149 eine Vielzahl von Zellträgerstreben 1 mit dazwischen aufgenommenen Batteriezellen 2 bzw. 2z miteinander lasttragend verbinden und ein Zellträgerverbundsystem 20 ausbilden. Wie dies insbesondere der Fig. 2B entnehmbar ist, weist der obere Querflansch 144 auf der dem Trennsteg 140 abgewandten Fläche einen durchgehenden Vorsprung 1441 auf, welcher sich in der dargestellten Ausführungsform entlang der Erstreckungsrichtung 10 der Zellträgerstrebe 1 erstreckt zur Beabstandung des Trägerkörpers 14 von einer Anlagefläche eines Batterieträgers oder eines Batteriegehäuses 4. Weiterhin ist der Fig. 2C entnehmbar, dass der obere Querflansch 144 eine Vielzahl von Ausnehmungen 147 umfasst zur Durchführung bzw. Freilegung der elektrischen Kontakte 21 der Batteriezellen 2z. Wie dies ebenfalls der Fig. 2C entnehmbar ist, sind die Ausnehmungen 147 an die Form des elektrischen Kontaktes 21 der aufzunehmenden zylindrischen Batteriezelle 2z angepasst, derart, dass lediglich der unmittelbare Bereich des elektrischen Kontaktes 21 freiliegt, aber ansonsten die Batteriezelle 2z möglichst umfassend durch den oberen Flansch 144 abgedeckt bzw. durch den Zellträgerkörper 14 umschlossen bzw. überdeckt wird.

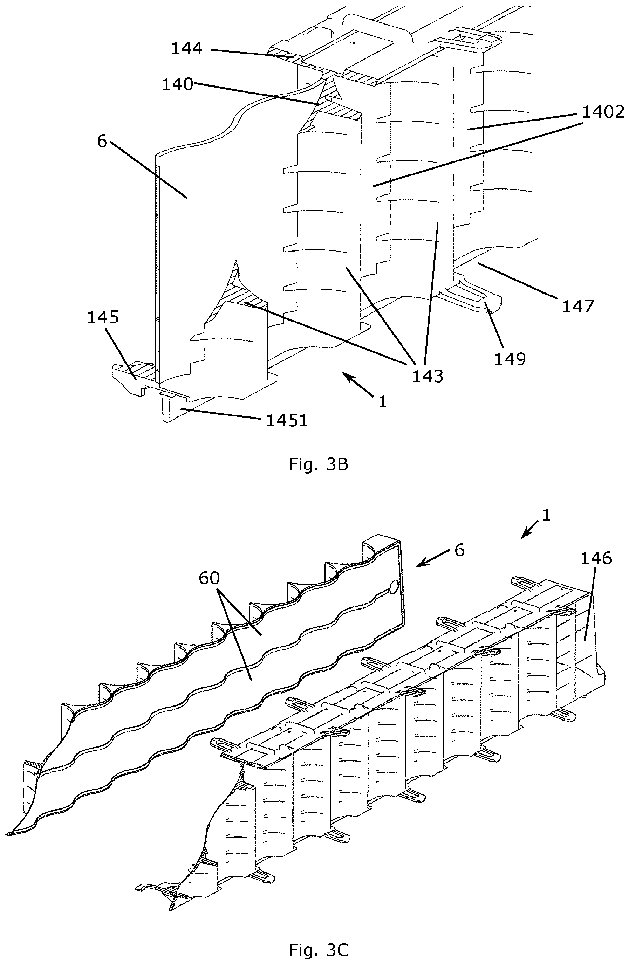

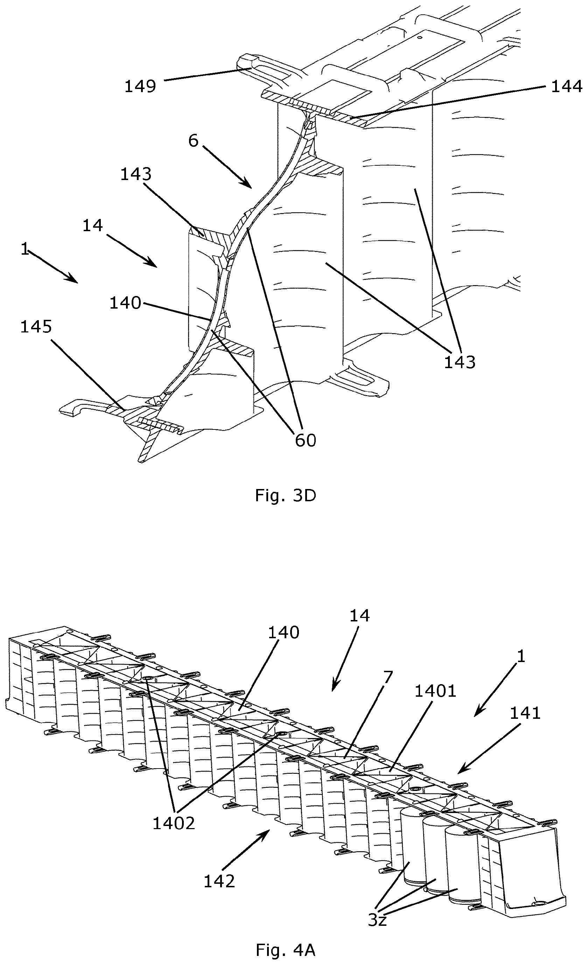

In den Figuren 3A bis 3D sind weitere beispielhafte Ausführungsformen erfindungsgemäßer Zellträgerstreben 1 dargestellt. Die Zellträgerstreben 1 sind dabei in den dargestellten beispielhaften Ausführungsformen der Figuren 3 jeweils zur Aufnahme zylindrischer Batteriezellen 2z ausgebildet, können jedoch auch alternativ zur Aufnahme von prismatischen Batteriezellen 2p abweichend ausgebildet werden.

Die Zellträgerstreben 1 gemäß Figuren 3 weisen im Wesentlichen die bereits vorbeschriebenen Merkmale der erfindungsgemäßen Zellträgerstreben 1 auf. Allerdings sind die Zellträgerstreben 1 gemäß der Figuren 3 weiterhin dahingehend ausgebildet, ein Temperierungselement 6 in dem Trägerkörper 14 zur aktiven Temperierung der Batteriezelle zu umfassen bzw. aufzunehmen. In der Fig. 3A sind dabei im Bereich des Trennsteges 140 eine Mehrzahl von Aussparungen 1402 ausgebildet zur Aufnahme eines vorzugsweise aktiven Temperierungselements 6 in dem Trägerkörper 14. In den oberen beiden Teilabbildungen der Fig. 3A ist das Temperierungselement 6 noch separat zu der Zellträgerstrebe 1 dargestellt zur besseren Verdeutlichung der im Bereich des Trennstegs vorgesehenen Aussparung 1402. Auch das Endelement 146 kann eine Aussparung umfassen bzw. genauer ein Loch zur Durchführung eines Anschlussstutzens des Temperierungselements 6 zur Zuführung eines insbesondere Temperierungsmediums.

In der unteren Teilabbildung der Fig. 3A ist das Temperierungselement 6 in der in dem Trägerkörper 14 aufgenommenen Konfiguration dargestellt. Aus der Fig. 3A wird ersichtlich, dass durch die Vorsehung der Aussparung 1402 im Bereich des Trennstegs 140 das Temperierungselement 6 unmittelbar angrenzend an die aufzunehmenden Batteriezellen 2 bzw. 2z ausgebildet ist, was für einen konduktiven Wärmetransport bevorzugt ist.

Die Fig. 3B zeigt eine weitere beispielhafte Ausführungsform einer Zellträgerstrebe 1 umfassend ein aktives Temperierungselement 6, wobei das aktive Temperierungselement 6 im Bereich des Trägerkörpers 14 eingebettet ist. Bei Ausführung des Trägerkörpers 14 als Spritzgussteil kann dieses Temperierungselement 6 während des Spritzgussvorgangs unmittelbar teilweise umspritzt bzw. eingebettet in den Trägerkörper 14 ausgestaltet werden. Wie dies auch der Fig. 3B entnehmbar ist, ist auch bei dieser Ausführungsform vorgesehen, dass der Trägerkörper 14 eine Mehrzahl von Aussparungen 1402 zwischen den Erhebungen 143 umfasst, so dass auch in dieser Ausführungsform das Temperierungselement 6 unmittelbar an die aufzunehmenden Batteriezellen 2 bzw. 2z zur Anlage gelangt.

Die Fig. 3C, 3D zeigt eine weitere beispielhafte Ausführungsform einer Zellträgerstrebe 1 umfassend ein Temperierungselement 6, welches in der beispielhaften Ausführungsform gemäß Figuren 3C und 3D unmittelbar als Aussparung in dem Trägerkörper 14 und insbesondere im Trennsteg 140 ausgebildet ist. Der Trennsteg 140 umfasst in der dargestellten Ausführungsform gemäß Figuren 3C bzw. 3D integrierte Kanäle 60 zur Durchführung eines Temperierungsmittels. In der dargestellten Ausführungsform gemäß Figuren 3C und 3D weist das in den Zellkörper 14 integrierte Kühlelement 6 zwei übereinander liegende Kanäle 60 zur Durchführung eines Temperierungsmediums auf. Durch die übereinanderliegenden Kanäle 60 kann das Temperiermittel bevorzugt gegenläufig zur Realisierung einer Gegenstromtemperierung durchgeführt werden.

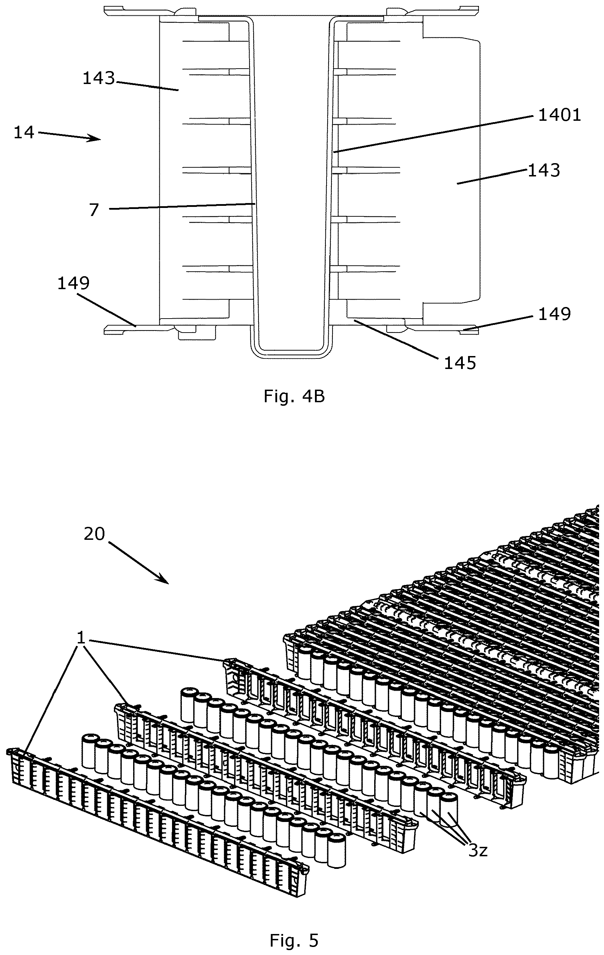

Die Figuren 4A und 4B zeigen eine weitere beispielhafte Ausführungsform einer Zellträgerstrebe 1, die, wie bereits zuvor ausgeführt, mit Merkmalen ausgestaltet werden kann. Die Zellträgerstrebe 1 gemäß den Figuren 4A und 4B weist die Besonderheit auf, dass der Trennsteg 140 in der Querschnittsebene kastenförmig ausgebildet ist zur Ausbildung eines Zwischenraums 1401 zwischen der ersten und zweiten Seitenfläche 141, 142. Wie dies insbesondere der Fig. 4B, aber auch der Fig. 4A, entnehmbar ist, kann in dem ausgebildeten Zwischenraum 1401 ein Strukturprofil 7 angeordnet und mit der Struktur des Trägerkörpers 14 lasttragend verbunden werden. Das Strukturprofil 7 kann insbesondere eine U-förmige Querschnittsfläche oder eine Querschnittsfläche gebildet durch ein geschlossenes Hohlprofil aufweisen und länglich in Erstreckungsrichtung 10 ausgebildet werden. Bevorzugt können in Erstreckungsrichtung 10 beabstandete Rippen zur Versteifung des Strukturprofils 7 vorgesehen werden. In den Ausführungsformen gemäß Fig. 4 kann es auch vorgesehen werden, dass in dem vorbezeichneten Zwischenraum 1401 mindestens ein Anbindungspunkt 1402 zur lasttragenden Verbindung des Trägerkörpers 14 mit einem Batterieträger oder einem Batteriegehäuse ausgebildet wird.

In der Fig. 5 ist eine beispielhafte Ausführungsform eines Zellträgerverbundsystems 20 dargestellt, wobei eine Vielzahl von Zellträgerstreben 1 mit einer Vielzahl von aufzunehmenden zylindrischer Batteriezellen 3z gestapelt und Zellträgerstreben 1 untereinander beispielsweise mittels Rastelementen 149 miteinander verbunden werden zur Ausbildung eines Zellträgerverbundsystems 20. Das Zellträgerverbundsystem 20 kann weiterhin mindestens ein in den Figuren nicht dargestelltes Zugband umfassen, welches aus einem zugfesten Material besteht und eine Vorspannung auf das Zellträgerverbundsystem 20 in Stapelrichtung aufbringt. Das zugfeste Material kann zumindest eine Lage eines unidirektionalen Fasertapes umfassen, wobei die Faserlängsrichtung in Längsrichtung des Zugbandes ausgerichtet ist.

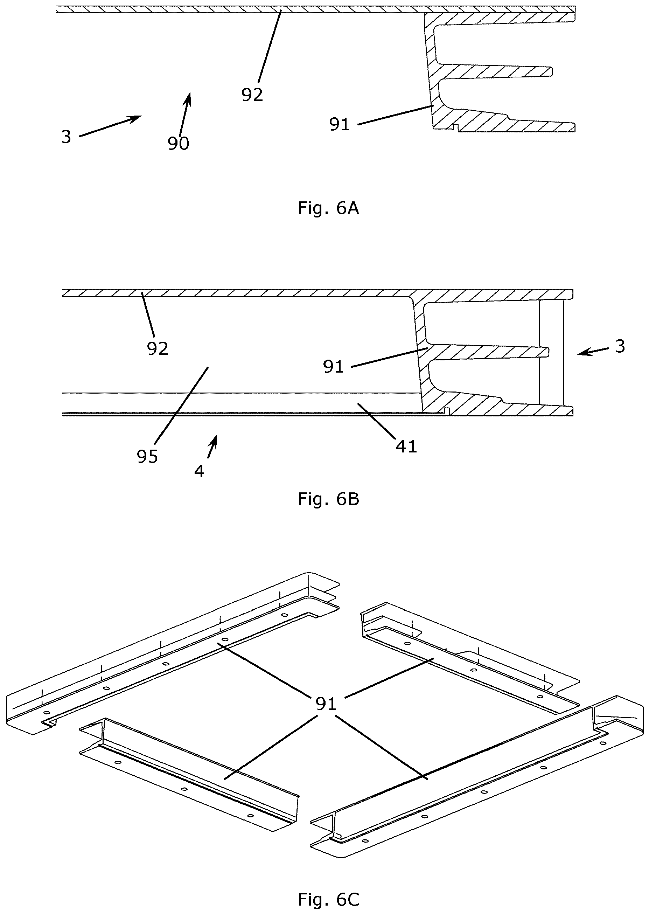

Der Figur 6A ist ein Detailausschnitt eines erfindungsgemäßen Batterieträgers 3 zu entnehmen, der zumindest einen Batterieträgerrahmen 91 und ein Batterieträgerunterteil 92 umfasst. Das Batterieträgerunterteil 92 ist mit dem Batterieträgerrahmen 91 verbindbar ausgestaltet zur Ausbildung eines einseitig offenen Aufnahmeraums 90 zur Anordnung des Zellträgerverbundsystems 20 oder der Mehrzahl von gestapelten Zellträgerstreben 1. Zur besseren Übersichtlichkeit ist das Zellträgerverbundsystem 20 bzw. die Zellträgerstreben 1 in der Fig. 6A nicht dargestellt.

Die Fig. 6B zeigt eine beispielhafte Ausführungsform eines erfindungsgemäßen Batteriegehäuses 4, welches einen Batterieträger 3 und ein Batteriegehäuseoberteil 41 umfasst zur Bildung eines allseitig umschlossenen Aufnahmeraums 95. Wie dies in Fig. 6B dargestellt ist, sind das Batterieträgerunterteil 92 und der Batterieträgerrahmen 91 in der dargestellten Ausführungsform gemäß Fig. 6B einteilig ausgeführt.

Die Fig. 6C zeigt eine beispielhafte Ausführungsform eines Batterieträgerrahmens 91, wobei dieser aus mehreren Einzelteilen zusammengesetzt wird, welche miteinander verbunden werden können.

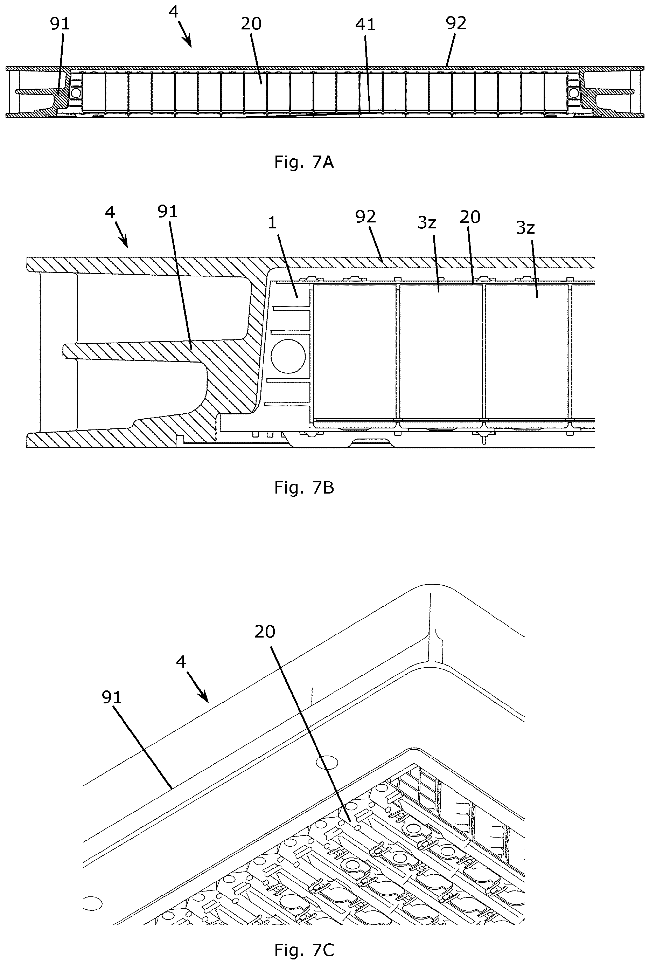

Den Figuren 7A bis 7C ist ein erfindungsgemäßes Batteriegehäuse 4 zu entnehmen, in welches ein Zellträgerverbundsystem 20 aufgenommen ist. Zur besseren Darstellbarkeit wurde in dem beispielhaften Batteriegehäuse 4 auf die Darstellung des Batteriegehäuseoberteils 41 verzichtet.

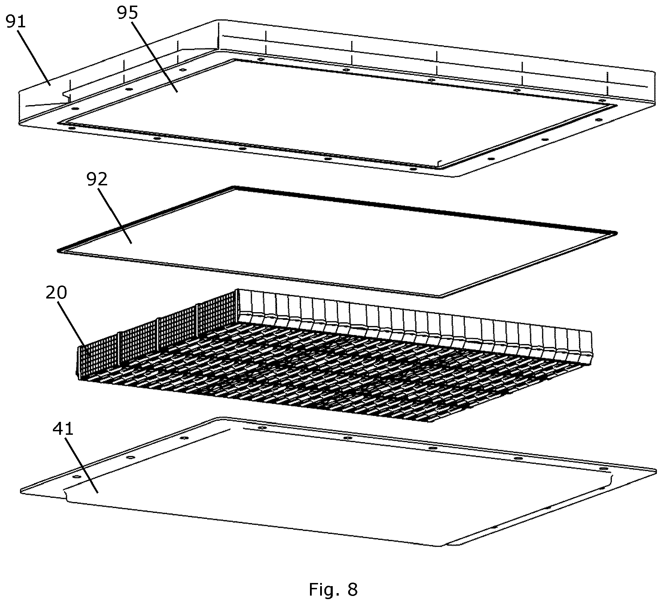

Die Fig. 8 zeigt eine weitere beispielhafte Ausführungsform eines Batteriegehäuses 4 umfassend zunächst einen Batterieträgerrahmen 91, ein Batterieträgerunterteil 92 sowie ein Batteriegehäuseoberteil 41 zur Ausbildung eines allseitig umschlossenen Aufnahmeraums 95 zur Aufnahme und Anordnung des Zellträgerverbundsystems 20.

## Patentansprüche

1. Zellträgerstrebe (1) zur Aufnahme und Separierung mehrerer Batteriezellen (2) mit einem entlang einer Erstreckungsrichtung (10) von einem ersten Ende (11) zu einem zweiten Ende (12) verlaufenden Trägerkörper (14) und einer orthogonal zu der Erstreckungsrichtung (10) verlaufenden Stapelrichtung (16); wobei der Trägerkörper (14) einen Trennsteg (140) zur Ausbildung eines in Stapelrichtung (16) trennenden Abschnitts umfasst mit einer ersten und zweiten einander gegenüberliegende Seitenfläche (141, 142); und
wobei die erste und/oder zweite Seitenfläche (141, 142) entlang der Erstreckungsrichtung (10) mehrere an die aufzunehmenden Batteriezellen (2) angepasste Erhebungen (143) zur Aufnahme der Batteriezellen (2) umfasst.

2. Zellträgerstrebe (1) nach Anspruch 1, wobei die Erhebungen (143) im Bereich der ersten und/oder zweiten Seitenfläche (141, 142) zur Aufnahme von prismatischen Batteriezellen (2p) und/oder zylindrischen Batteriezellen (2z) ausgebildet sind.

3. Zellträgerstrebe (1) nach Anspruch 1 oder 2, wobei der Trägerkörper (14) weiterhin einen oberen Querflansch (144) umfasst, welcher an eine obere Endfläche des Trennstegs (140) anschließt zur Ausbildung eines "┌"- oder "T"-förmigen Querschnittprofils des Trägerkörpers (14) und zur Ausbildung einer an die jeweilige erste und/oder zweite Seitenfläche (141, 142) angrenzende obere Anlagefläche für die aufzunehmenden Batteriezellen (2).

4. Zellträgerstrebe (1) nach einem der Ansprüche 1 bis 3, wobei der Trägerkörper (14) weiterhin einen unteren Querflansch (145) umfasst, welcher an einer unteren Endfläche des Trennstegs (140) anschließt zur Ausbildung eines "C"-, "Z"- oder "Doppel-T"-förmigen Querschnittprofils des Trägerkörpers (14) und zur Ausbildung einer an die jeweilige erste und/oder zweite Seitenfläche (141, 142) angrenzende untere Anlagefläche für die aufzunehmenden Batteriezellen (2).

5. Zellträgerstrebe (1) nach Anspruch 3 oder 4, wobei in dem oberen und/oder unteren Querflansch (144, 145) entlang der Erstreckungsrichtung (10) mehrere voneinander beabstandete Ausnehmungen (147) oder Löcher ausgestaltet sind zur Durchführung von elektrischen Kontakten (21) und/oder von Sicherheitsventilen (23) der aufzunehmenden Batteriezellen (2).

6. Zellträgerstrebe (1) nach einem der vorausgehenden Ansprüche, wobei der Trägerkörper (14) einen hybriden Materialaufbau umfassend zumindest eine erste Komponente gebildet aus einem Kunststoff und eine zweite Komponente gebildet aus einem Versteifungsmaterial zur Erhöhung der mechanischen Eigenschaften aufweist.

7. Zellträgerstrebe (1) nach einem der vorausgehenden Ansprüche, wobei der Trägerkörper (14) an dem ersten und/oder zweiten Ende (11, 12) in Richtung der Erstreckungsrichtung (10) mindestens ein Endelement (146) umfasst zur Ausbildung einer an die jeweilige erste und/oder zweite Seitenfläche (141, 142) angrenzende Endanlagefläche für die aufzunehmenden Batteriezellen (2).

8. Zellträgerstrebe (1) nach einem der vorausgehenden Ansprüche, wobei im Trennsteg (140) mindestens eine Aussparung (1402) ausgebildet ist zur Aufnahme eines vorzugsweise aktiven Temperierungselements (6) in dem Trägerkörper (14) zur konduktiven Temperierung der Batteriezellen (2).

9. Zellträgerstrebe (1) nach einem der vorausgehenden Ansprüche, wobei der Trägerkörper (14), bevorzugt im Bereich des unteren und/oder oberen Querflansches (144, 145), aneinander angepasste erste und zweite Rastelemente (149) umfasst zur lasttragenden Verbindung des Trägerkörpers (14) mit zumindest einer weiteren Zellträgerstrebe (1).

10. Zellträgerstrebe (1) nach einem der vorausgehenden Ansprüche, wobei der Trennsteg (140) in der Querschnittsebene kastenförmig ausgebildet ist zur Ausbildung eines Zwischenraums (1401) zwischen der ersten und zweiten Seitenfläche (141, 142).

11. Zellträgerstrebe (1) nach Anspruch 10, wobei ein Strukturprofil (7) in den Zwischenraum (1401) angeordnet ist, welches lasttragend mit dem Trägerkörper (14) verbunden ist.

12. Zellträgerstrebe (1) nach Anspruch 11, wobei das Strukturprofil (7) eine U-förmige Querschnittsfläche oder eine Querschnittsfläche gebildet durch ein geschlossenes Hohlprofil aufweist und länglich in der Erstreckungsrichtung (10) ausgebildet ist und bevorzugt in Erstreckungsrichtung (10) beabstandete Rippen zur Versteifung des Strukturprofils (7) umfasst.

13. Zellträgerstrebe (1) nach einem der Ansprüche 10 bis 12, wobei in dem Zwischenraum (1401) mindestens ein Anbindungspunkt (1402) zur lasttragenden Verbindung des Trägerkörpers (14) mit einem Batterieträger (3) oder einem Batteriegehäuse (4) angeordnet ist.

14. Zellträgerverbundsystem (20) umfassend:
eine Mehrzahl von Zellträgerstreben (1) nach einem der Ansprüche 1 bis 13 zur Aufnahme und Separierung mehrerer Batteriezellen (2);
und zumindest ein Zugband, wobei bevorzugt das mindestens eine Zugband aus einem zugfesten Material besteht, bevorzugt zumindest eine Lage eines unidirektionalen Fasertapes umfasst, wobei die Faserlängsrichtung in Längsrichtung des Zugbands ausgerichtet sind.

15. Batterieträger (3) umfassend:
eine Mehrzahl von Zellträgerstreben (1) nach einem der Ansprüche 1 bis 13 oder mindestens ein Zellträgerverbundsystem (20) nach Anspruch 14,
einen Batterieträgerrahmen (91), und
ein Batterieträgerunterteil (92);
wobei das Batterieträgerunterteil (92) mit dem Batterieträgerrahmen (91) verbindbar sind zur Ausbildung eines einseitig offenen Aufnahmeraums (90) zur Anordnung des Zellträgerverbundsystems (20) oder der Mehrzahl von gestapelten Zellträgerstreben (1).

16. Batteriegehäuse (4) umfassend:
zumindest einen Batterieträger (3) gemäß Anspruch 15 und ein Batteriegehäuseoberteil (41),
wobei das Batteriegehäuseoberteil (41) und das Batterieträgerunterteil (92) mit dem Batterieträgerrahmen (91) verbindbar ist zur Ausbildung eines umschlossenen Aufnahmeraums (95) zur Anordnung des Zellträgerverbundsystems (20) oder der Mehrzahl von gestapelten Zellträgerstreben (1).
